# EUROPEAN PATENT APPLICATION

(11) **EP 4 818 976 A1**
(43) Date of publication of application: **07.10.2026**
(21) Application number: 26167799.1
(22) Date of filing: 25.03.2026
(51) Int. Cl.: G06N 3/0475

(54) **INTELLIGENT PROMPT ROUTING ACROSS MACHINE LEARNING MODELS**

(30) Priority: 31.03.2025 US 202519096358
(71) Applicant: Amazon Technologies, Inc., Seattle, WA 98108-1226 (US)
(72) Inventor: SRINIVASAN, Balasubramaniam, Seattle, 98109 (US); ZHOU, Yun, Seattle, 98109 (US); DING, Haibo, Seattle, 98109 (US); CHEONG, Lin Lee, Seattle, 98109 (US); KANORIA, Shipra Agarwal, Seattle, 98109 (US); UMA NARESH, Niranjan, Seattle, 98109 (US); SUBRAMANIAN, Shreyas Vathul, Seattle, 98109 (US); FENG, Aosong, Seattle, 98109 (US); GUAN, Sheng, Seattle, 98109 (US); CHEN, Yueyan, Seattle, 98109 (US)
(74) Representative: D Young & Co LLP

(57) **Abstract**

A user of a machine learning model service may lack information about the suitability of particular generative machine learning models for particular tasks. The user may benefit from a machine learning model router that outputs intelligent decisions on which generative machine learning model is more suitable than other generative machine learning models for a particular prompt with respect to known or unknown hardware and process constraints. Suitability may be based on a variety of factors, such as quality of the model for the particular prompt, expected resource expenditure for the particular prompt such as cost or latency, and other factors such as which computing device or devices hosts the generative machine learning model.

## Description

### BACKGROUND

Generative machine learning models may have a variety of skill levels with respect to different tasks. Generative machine learning models may be hosted on various types of computing devices, in a variety of locations, and may have a variety of pricing calculations. Users of a generative machine learning model service may select generative machine learning models which are suboptimal for the users' purposes, or the users may expend a significant amount of effort and resources to independently find and assess information about the various generative machine learning models available for use.

### BRIEF DESCRIPTION OF THE DRAWINGS

FIG. 1 is a block diagram illustrating a machine learning model router in a service provider network environment, according to some embodiments.
FIG. 2A is a block diagram illustrating components of a machine learning model router, according to some embodiments.
FIG. 2B is a block diagram illustrating a user interface through which a user may customize a machine learning model router, according to some embodiments.
FIG. 3 is a block diagram illustrating the inputs and functions of components of a machine learning model router, according to some embodiments.
FIG. 4 is a block diagram illustrating specific estimator models and the inputs and outputs the estimator models use, according to some embodiments.
FIG. 5A is a block diagram illustrating specific inputs and associated outputs of a model quality estimator, according to some embodiments.
FIG. 5B is a block diagram illustrating specific inputs and associated example outputs of a model output amount estimator, according to some embodiments.
FIG. 6A is a block diagram illustrating specific inputs and associated example outputs of a model cost estimator, according to some embodiments.
FIG. 6B is a block diagram illustrating specific inputs and associated example outputs of a model latency estimator, according to some embodiments.
FIG. 7A is a block diagram illustrating specific inputs and the expected output of a selector model, according to some embodiments.
FIG. 7B is a block diagram illustrating examples of inputs and associated outputs of a selector model, according to some embodiments.
FIG. 8 is a block diagram illustrating an initial analysis model, according to some embodiments.
FIG. 9 is a block diagram illustrating an update model, according to some embodiments.
FIG. 10A is a block diagram illustrating a combiner model, according to some embodiments.
FIG. 10B is a block diagram illustrating an encoder training group, according to some embodiments.
FIG. 11 is a flow diagram illustrating a process of using a machine learning model router to select a generative machine learning model for a prompt, according to some embodiments.
FIG. 12 is a flow diagram illustrating a process of initial analysis for a machine learning model router, according to some embodiments.
FIG. 13 is a flow diagram illustrating a process of updating a machine learning model router, according to some embodiments.
FIG. 14 is a block diagram illustrating an example computer system that implements some, or all, of the techniques described herein, according to some embodiments.

While embodiments are described herein by way of example for several embodiments and illustrative drawings, those skilled in the art will recognize that embodiments are not limited to the embodiments or drawings described. It should be understood, that the drawings and detailed description thereto are not intended to limit embodiments to the particular form disclosed, but on the contrary, the intention is to cover all modifications, equivalents and alternatives falling within the spirit and scope as described by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include," "including," and "includes" mean including, but not limited to.

It will also be understood that, although the terms first, second, etc. may be used herein to describe various elements, these elements should not be limited by these terms. These terms are only used to distinguish one element from another. For example, a first contact could be termed a second contact, and, similarly, a second contact could be termed a first contact, without departing from the scope of the present teachings. The first contact and the second contact are both contacts, but they are not the same contact.

### DETAILED DESCRIPTION

A generative machine learning model router may assess a prompt submitted by a user for generative machine learning model processing and may identify one or more most suited generative machine learning model to use to process the prompt. Various generative machine learning models may have different relative strengths and weaknesses regarding particular types of tasks. For example, a first generative machine learning model may have been specifically trained with a large amount of mathematical data, and the generative machine learning model may perform mathematical tasks more accurately than another generative machine learning model which was trained using less mathematical data. A generative machine learning model router may be more likely to recommend or select the first generative machine learning model than the other generative machine learning model for a prompt which involves mathematics.

Additionally, users of a generative machine learning model service may have preferences for generative machine learning model specifications. For example, a first user may prefer responses which are accurate and fast, and may have little preference for cost. Another user may have a generative machine learning model budget and may be willing to wait longer for a cheaper solution than the first user. A generative machine learning model router may recommend or select different generative machine learning models to process the same prompt submitted by the first user and the other user.

A generative machine learning model router may include several lightweight machine learning models, such as an initial analysis model, an encoder, a set of estimator models, and a selection model. An update model may analyze output of a selected generative machine learning model and adjust the models used in the generative machine learning model router based on the output. For example, an encoder may struggle to identify a prompt which spells out mathematical problems (e.g., "what is the square root of four?") as a prompt which a mathematically skilled generative machine learning model would be suited to answer accurately. The update model may identify that the prompt was processed with poor accuracy by a non-mathematically skilled generative machine learning model and adjust the encoder to be more receptive to spelled out mathematical terms (e.g., "square root" and "four") as indications of a prompt which a mathematically skilled generative machine learning model is well suited to respond to accurately.

One or more of the embodiments described herein may be capable of achieving one or more of the following technical advantages. Embodiments may maximize, from a user's perspective, the performance of a set of generative machine learning models within user constraints of resources such as time and money. Different than traditional load balancing algorithms, intelligent ML prompt routing cannot be achieved with a deterministic model applying an algorithm. For example, understanding a prompt and being able to identify and manipulate driving attributes from the prompt is a technical challenge traditional load balancing algorithms cannot solve. Building from the initial prompt analysis, intelligent prompt routing needs to adapt to multi-dimensional constraints with respect to time. As an example, embodiments of the present disclosure not only assess models' strengths and weaknesses, they may also need to know models' token processing efficiency with respect to the given prompt, acceptable error rate with respect to an expected turnaround time, and/or current traffic to one or more models. In executing machine learning (ML) tasks, tokens are individual units of data that are fed into a model during a transaction. They can be words, phrases, or even entire sentences from a natural language input, for example. As discussed above, depending on how models are trained, they often perform differently even to the same prompt and may consume tokens differently. Static mechanisms configured to route workloads based on traffic information/capacity information cannot solve the technical issues arising from dynamic token usage on a case-by-case basis.

Further, embodiments may be adapted easily to route to new generative machine learning models, including generative machine learning models of new or unknown architectures by obtaining a consistent set of information about the new generative machine learning models. Embodiments may adapt to preferences of particular users based on user feedback. Embodiments may enable implementation of regulations on a generative machine learning model service by routing to permitted generative machine learning models for the user to interact with based on the user's requirements, requirements of a user's organization, and requirements of a user's location. Embodiments may reduce expenditure of computing resources by rejecting prompts which would be rejected by a generative machine learning model with more significant use of computing resources than the generative machine learning model router. Embodiments may also reduce user frustration and expenditure of computing resources by appropriately matching prompts to generative machine learning models which are well suited to the prompts, thus reducing the likelihood a user runs the prompt again.

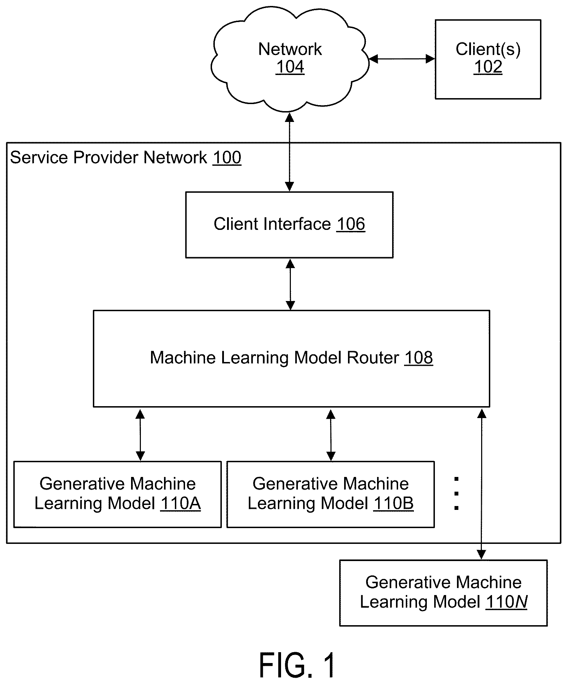

FIG. 1 is a block diagram illustrating a machine learning model router in a service provider network environment, according to some embodiments.

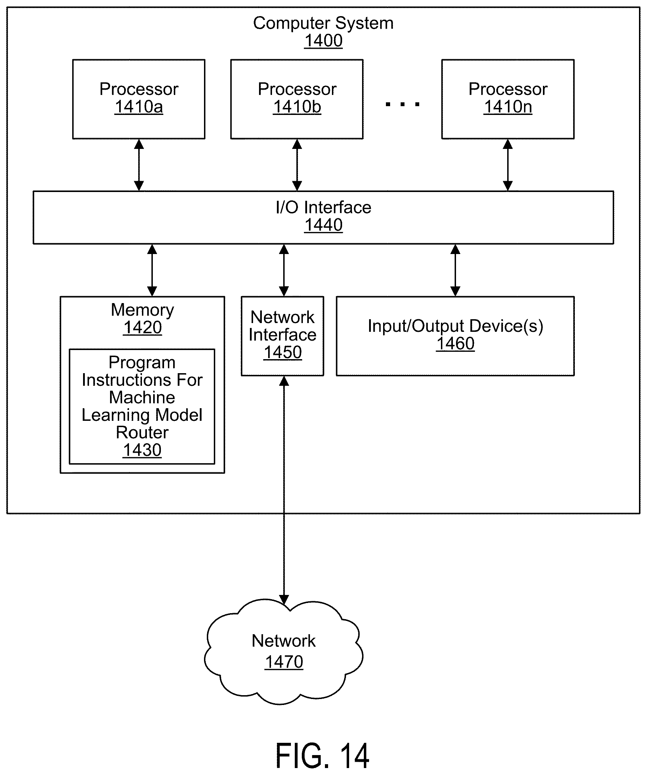

A service provider network 100 may provide services to client(s) 102 using computing devices, such as computing system 1400 illustrated in FIG. 14. Client(s) 102 may be users of a generative machine learning model service offered by the service provider network 100. Client(s) 102 may interact with the service provider network 100 via a network 104, such as the Internet. A client interface 106 may receive generative machine learning model prompts to be processed by a non-specified generative machine learning model of a set of generative machine learning models 110.

A generative machine learning model router 108 may determine which of the generative machine learning models 110 is to process the generative machine learning model prompt based on the prompt itself, user requirements and preferences, and information about the generative machine learning models 110. Information about the generative machine learning models 110 (for example, pricing information, hosting locations, and current usage amounts) may be provided by the creators of the generative machine learning models 110. The generative machine learning model router 108 may obtain information about the generative machine learning models 110 (for example, how a generative machine learning model 110 performs with respect to accuracy, correctness, conciseness, legibility, coherence, and other indicators of quality with regard to different types of tasks) by directing prompts to the generative machine learning models and judging the output provided by the generative machine learning models 110.

A generative machine learning model 110 may be provided by a service provider network 100 as part of a generative machine learning model service, for example, generative machine learning model 110A and generative machine learning model 110B may be generative machine learning models 110 which are part of a generative machine learning model service. The generative machine learning model service may also facilitate user interaction with generative machine learning models 110 which are external to the generative machine learning model service, for example, generative machine learning model 110*N* may be a generative machine learning model 110 which is hosted on a computing device of the client 102. The generative machine learning model router 108 may select which of the generative machine learning models 110 is to process the generative machine learning model prompt based on the information available to the generative machine learning model router 108 about each of the generative machine learning models 110. While 110 is depicted as generative machine learning model, one or more of 110s may also be a generative AI model capable of creating and running inference on multi-modal inputs, a large language model (LLM), a large video model (LVM), a retrieval-augmented generation (RAG), or an AI agent. This is also applicable to the embodiments discussed below.

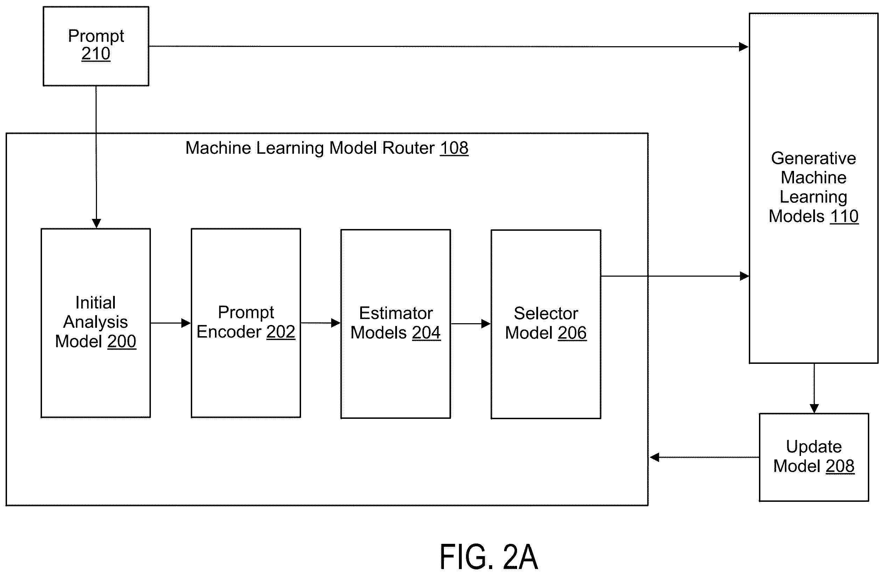

FIG. 2A is a block diagram illustrating components of a machine learning model router, according to some embodiments.

A generative machine learning model prompt 210 may be received at a generative machine learning model router 108 at an initial analysis model 200. An initial analysis model 200 may perform basic checks of the generative machine learning model prompt 210, for example determining whether the generative machine learning model prompt 210 implicates a guardrail or is beyond a threshold level of complexity for a generative machine learning model 110. The initial analysis model 200 may reject generative machine learning model prompts 210 which implicate a guardrail. The initial analysis model 200 may divide an overly complicated generative machine learning model prompt 210 into multiple less complicated generative machine learning model prompts 210. The initial analysis model 200 may contribute to the overall function of the generative machine learning model router and may be considered to be logically positioned outside of the generative machine learning model router.

A generative machine learning model router 108 may then use a prompt encoder 202 to generate a prompt embedding. The prompt embedding may be a multi-dimensional vector which represents aspects of the generative machine learning model prompt 210. The generative machine learning model router 108 may use estimator models 204 to estimate consideration factors based on the prompt embedding. The generative machine learning model router 108 may use a selector model 206 to select a generative machine learning model 110 based on the consideration factors. An update model 208 may analyze output of the generative machine learning models 110 adjust the components of the generative machine learning model router 108 based on the update model 208's analysis of the output.

The components of the generative machine learning model may be trained together or individually in an initial training phase and in continuous training update phases.

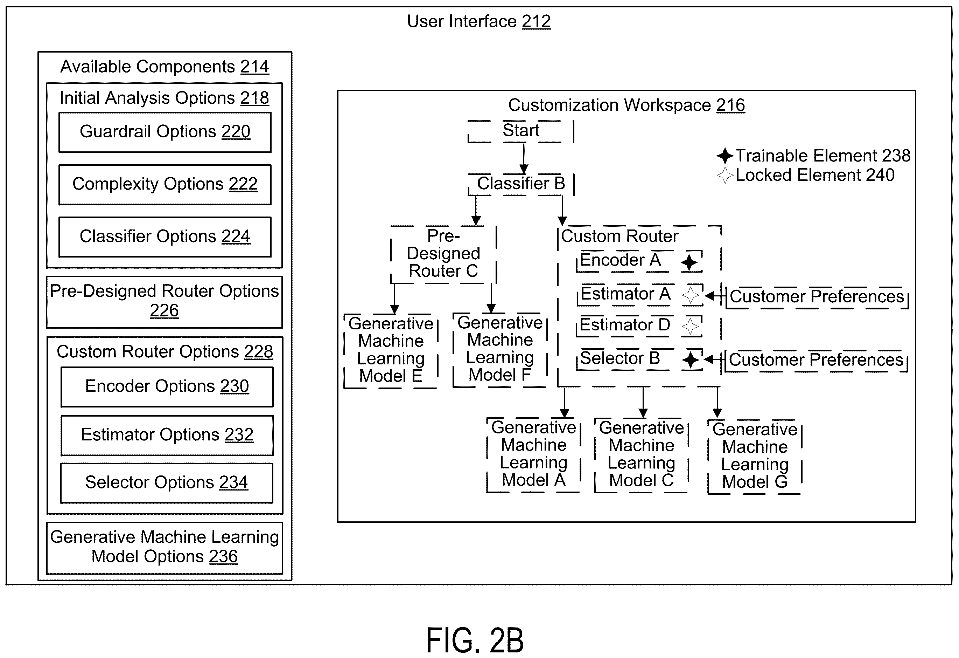

FIG. 2B is a block diagram illustrating a user interface through which a user may customize a machine learning model router, according to some embodiments.

A user may customize a generative machine learning model router using a user interface 212. A user interface 212 may provide available components 214 which a user may place into a customization workspace 216 to customize a generative machine learning model router. Available components 214 may include initial analysis options 218, pre-designed router options 226, custom router options 228, and generative machine learning model options 236. The available components 214 may be pre-trained machine learning models, decision logic, calculation logic, or other kinds of processing components.

Initial analysis options 218 may include analysis which determines whether a router (comprising a prompt encoder, estimator models, and a selector) receives a prompt at all, or receives the prompt in a state which is altered from an initial state of the prompt. For example, guardrail options 220 may be options to filter prompts out of analysis by the generative machine learning model router as a whole. Although guardrail options 220 are included as initial analysis options 218 guardrails may be placed anywhere in the logic of a generative machine learning model router. For example, a user may design a generative machine learning model router with guardrails which correspond to the actual guardrails used by individual generative machine learning models, where the guardrails are checked once an individual machine learning model is selected. As another example, a guardrail may be checked after a classifier is applied, such as a classifier for modalities (i.e., text, image, audio, video, etc.) such that the guardrail is checked for prompts implicating one modality and is not checked for prompts implicating another modality. Guardrails may prevent delay and expense incurred by attempting to run a generative machine learning model prompt which a selected generative machine learning model will reject. Additionally, as shown in the customization workspace 216, a generative machine learning model router may include a "meta router" which may be a component that selects a router to determine which generative machine learning model is to be used to process the generative machine learning model prompt. The meta router may be a type of initial analysis model which determines traits of the generative machine learning model prompt which may be suited for a particular, specialized router, such as a router trained to direct generative machine learning model prompts to a set of specialized generative machine learning models trained to handle specific types of prompts.

Complexity options 222 include the detection of overly complicated prompts and the division of the overly complicated prompts into less complicated prompts. Other examples of complexity options 222 include the option to simplify prompts by replacing unusual words with more common synonyms and the option to bypass routing and forward exceedingly simple prompts to a pre-selected generative machine learning model (i.e., the fastest or the cheapest available generative machine learning model).

Classifier options 224 enable users to define multiple routers (each may individually comprise a prompt encoder, estimator models, and a selector) based on a classification of a prompt. For example, prompts targeting generative machine learning models of different modalities may be classified according to the targeted modalities, and may be analyzed using different estimator models. A classifier for modalities may be trained to identify qualities of the prompt which indicated the expected modality of the response. For example, prompts including a "?" may be targeting a generative machine learning model which responds using text, such as a large language model (LLM). Prompts which include the phrase "show me" may be targeting a generative machine learning model which responds using images. Prompts which include a non-text modality may be targeting a generative machine learning model which responds using the same modality (e.g., audio or images).

Pre-designed router options 226 may include routers (each may individually comprise a prompt encoder, estimator models, and a selector) which a user does not need to independently construct. For example, pre-designed routers may include router designs which are popular for particular use cases or tasks, such as business logic routers (or other task-identifying router), language-specific routers, domain expertise routers (such as modality-specific routers), latencybased routers, or fallback routers. A fallback router may automatically route a generative machine learning model prompt to a pre-selected generative machine learning model in the event another router experiences a failure or a time out. A user may add a pre-designed router to an overall generative machine learning model router using a customization workspace 216 and may modify the pre-designed router using the customization workspace 216 or via continuous training by marking particular elements of the pre-designed router as trainable elements 238.

Encoder options 230 may include various encoders. Encoders may vary in the amount and type of training data that an individual encoder has been trained on. Users may use a prompt encoder in a generative machine learning model router and may modify the encoder by marking the encoder as a trainable element 238 which may be modified by an update model. A prompt encoder may be trained in tandem with a model identity encoder which may use pre-obtained information about generative machine learning models to generate model identity embeddings, and may re-generate the model identity embeddings when the encoder is updated.

Estimator options 232 may include models which generate estimates of various consideration factors. For example, an estimator may generate an estimate of an indication of quality such as accuracy, correctness, conciseness, legibility, coherence, and other indicators of quality or resource consumption such as an estimate of cost, latency, computing resource wear, and electricity. Estimators for resource consumption may rely on an estimate of an amount of output given ones of the generative machine learning models will generate based on the prompt.

Selector options 234 may include selectors with pre-defined weights. A user may modify the weights of a selector directly or via continuous training by marking the selector as a trainable element 238. Generative machine learning model options 236 may include generative machine learning models for which there is a set of information about the generative machine learning model that a model identity encoder can use to generate a model identity embedding. Generative machine learning models selected by the user are available for consideration by the router. The user may limit particular routers of an overall generative machine learning model router to particular generative machine learning models, for example, in a use case where a user applies a classifier to direct prompts targeting different modalities to different routers, the user may make generative machine learning models of the respective modalities available to the routers.

A user may design an overall generative machine learning model router using the customization workspace 216. The user may further modify components of the generative machine learning model router with customer preferences or via continuous training. The user may designate that an update model is to update elements after use of the generative machine learning model router by marking the elements as trainable elements 238, or may designate that the update model is not to update the elements by marking the elements as locked elements 240. The user may provide particular components of the overall generative machine learning model router which have been trained using the user's training data and evaluations.

Customer preferences may be set directly or learned via continuous training. For example, a user may set a preference that, for every US$0.10 increase in cost, the user would prefer an additional 0.5 seconds of latency. Thus, the evaluation of cost and latency at the selector may be affected by the preference, or the scoring of cost relative to a latency score may be affected by the preference. The user may also designate preferences as to how continuous training is performed, for example, the user may prefer a large learning rate which tunes the trainable elements 238 with fewer instances of use of the generative machine learning model router, or the user may prefer a smaller learning rate which is more likely to result in accurate tuning of the trained elements 238.

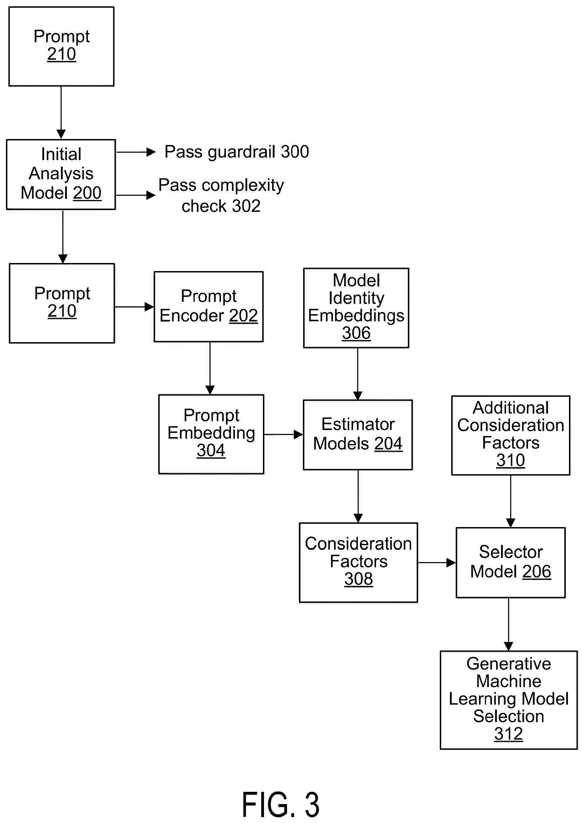

FIG. 3 is a block diagram illustrating the inputs and functions of components of a machine learning model router, according to some embodiments.

A generative machine learning model router may generally use the components illustrated in FIG. 3 to select a generative machine learning model. The generative machine learning model prompt 210 may be first analyzed by an initial analysis model 200. The initial analysis model 200 may ensure that the particular generative machine learning model prompt 210 passes generative machine learning model guardrails (300) and passes a complexity check (302) or is divided into less complex prompts that do individually pass the complexity check. For example, the generative machine learning model prompt 210 may be "Why is it funny to bring 5! cakes to a birthday party?" The initial analysis model 200 may identify that responding to the prompt may require solving the mathematical term "5!" and also explaining a joke. A prompt focused on two different types of tasks may be difficult for a single generative machine learning model to answer, so the prompt may be above a threshold complexity. Other examples of complications which may cause a prompt may exceed a threshold level of complexity are that the prompt includes multiple questions, the prompt includes questions directed to multiple fields, and that the prompt includes an incorrect assumption or fact which would need to be addressed in order to give a response to the prompt as a whole.

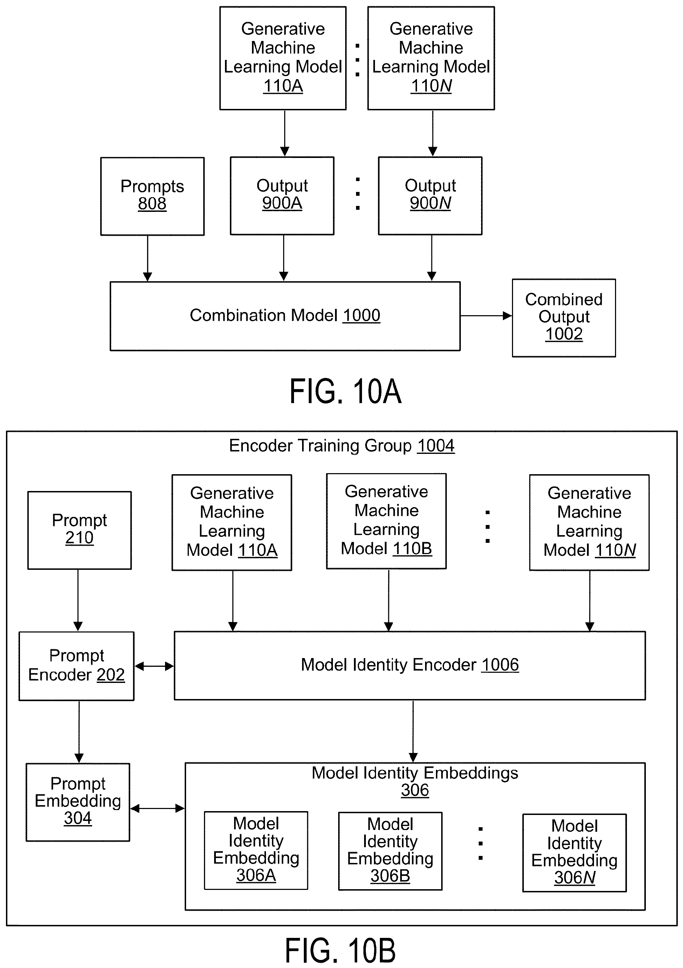

The initial analysis model 200 may divide the prompt into "[Simplify] 5! [to an integer value]" and "Why is it funny to bring [5!] cakes to a birthday party? [Include the output related to the first prompt]" and deliver the prompts separately to a prompt encoder 202, to be recombined later during processing of the prompts by the generative machine learning models 110, for example, by a combination model similar to combination model 1000 illustrated in FIG. 10A. The prompt encoder 202 generates a prompt embedding. The prompt encoder 202 may have been trained alongside a model identity encoder which previously generated a model identity embedding 306 to represent each of the generative machine learning models under consideration. The model identity embeddings 306 may represent similar information as the prompt embedding 304. For example, the prompt embedding 304 may have a dimension corresponding to a type of task the prompt implicates. The model identity embeddings 306 may have a set of dimensions which corresponds to the skill of the generative machine learning models at different types of task.

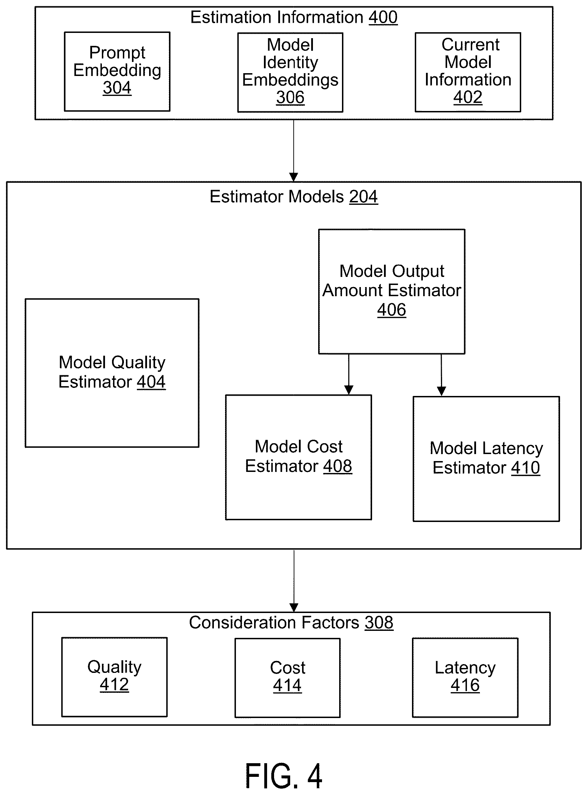

The estimator models 204 may use the prompt embedding 304, the model identity embeddings 306, and other information to generate consideration factors 308. The estimator models 204 are explained in further detail in relation to FIGs. 4-6B. The selector model 206 may use the consideration factors 308 and additional consideration factors 310 to select a particular generative machine learning model (312) from the set of generative machine learning models under consideration.

FIG. 4 is a block diagram illustrating specific estimator models and the inputs and outputs the estimator models use, according to some embodiments.

Estimator models 204 may include models which estimate quality or indications of quality and models which estimate resource consumption. For example, the model quality estimator 404 may estimate the quality 412 of generative machine learning model output from a given generative machine learning model for a given generative machine learning prompt. Other examples of quality estimators may be accuracy estimators, correctness estimators, conciseness estimators, legibility estimators, coherence estimators, and estimators for other indicators of quality. A model quality estimator 404 may include estimators for particular indicators of quality, and a quality estimate 412 may be a vector with various dimensions which correspond to the indicators of quality. The model quality estimator 404 may reduce the vector to a quality score, for example a score between 1 and 10.

The model cost estimator 408 and the model latency estimator 410 may estimate resource consumption for a given generative machine learning model for a given generative machine learning model prompt, particularly the resources of price (cost 414) and time (latency 416) respectively. Other examples of resource consumption estimators may include a computing resource wear estimator and an energy consumption estimator, which may be particularly useful to a user with a preference for processing generative machine learning model prompts on computing devices owned by the user.

The resource consumption estimators may base estimations on an estimated amount of output that given ones of the generative machine learning models under consideration will generate. The model output amount estimator 406 may estimate an amount of output for each generative machine learning model and provide these estimates to the resource consumption estimators. The model output amount estimator 406 and model quality estimator 404 may both use the prompt embedding 304 and the model identity embeddings 306 which have been aggregated, for example by an aggregation network (not illustrated). The aggregation network may combine the prompt embedding 304 and model identity embeddings 306 using matrix factorization, multi-layer perceptron, attention layers, bilinear functions, concatenation, and other aggregation methods.

A user may select which generative machine learning models are available for consideration, and this set of generative machine learning models may be associated with respective model identity embeddings 306 which are used by the estimator models 204. Generative machine learning models may be excluded from consideration based on a user defined policy, an organization defined policy, or regulations. Excluded generative machine learning models may be excluded from consideration by not providing respective model identity embeddings 306 for the generative machine learning models to the estimator models 204.

The estimator models 204 may use estimation information 400 to generate the consideration factors 308. Estimation information 400 may be in the form of the prompt embedding 304, the model identity embeddings 306 for each generative machine learning model the generative machine learning model router is considering, and current model information 402, which may include information relevant to resource consumption estimation, such as each generative machine learning model's pricing structure, current usage amounts, and current location with regard to network accessibility. The consideration factors 308 may be generated as estimated values, such as estimated cost 414 being delivered in a US$ or other currency amount, or as scores, such as a score between 1 and 10.

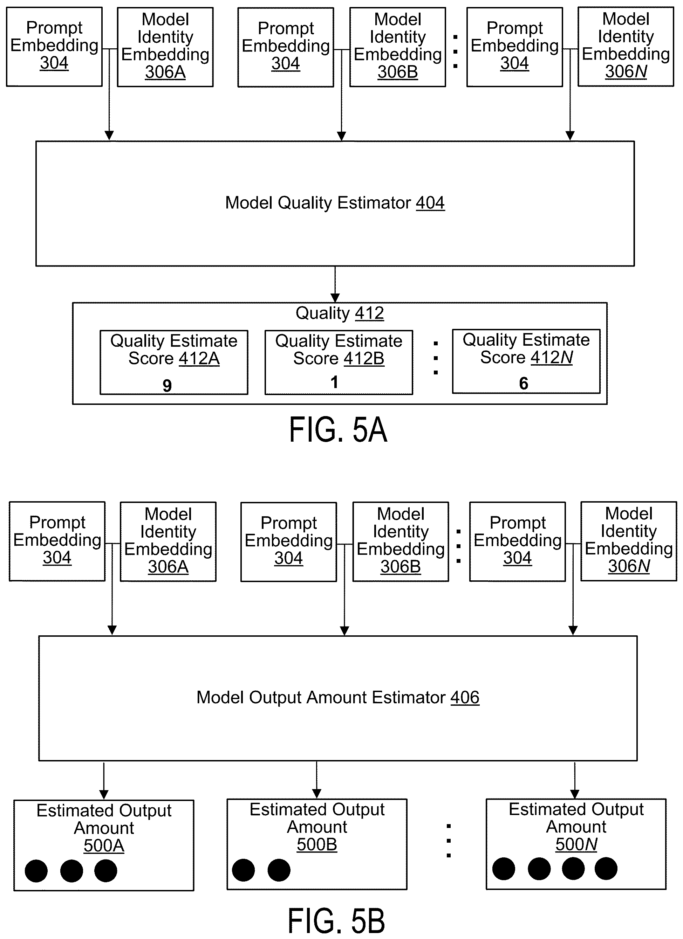

FIG. 5A is a block diagram illustrating specific inputs and associated outputs of a model quality estimator, according to some embodiments.

A model quality estimator 404 may generate quality estimate scores 412 (or other estimates of quality such as quality vectors with dimensions that are associated with indications of quality) using an aggregation of the prompt embedding 304 and the respective model identity embedding 306. The prompt embedding 304 and model identity embeddings 306 may be aggregated using matrix factorization, multi-layer perceptron, attention layers, bilinear functions, concatenation, and other aggregation methods. The model quality estimator 404 may be a neural network or other machine learning model trained to generate respective estimates of quality 412 based on the prompt embeddings 304 and model identity embeddings 306.

FIG. 5B is a block diagram illustrating specific inputs and associated example outputs of a model output amount estimator, according to some embodiments.

A model output amount estimator 406 may generate estimated output amounts 500 for respective generative machine learning models based on an aggregation of the prompt embedding 304 and the respective model identity embedding 306. The prompt embedding 304 and model identity embeddings 306 may be aggregated using matrix factorization, multi-layer perceptron, attention layers, bilinear functions, concatenation, and other aggregation methods. The estimated output amounts 500 may be estimates of an amount of output a given generative machine learning model may generate in response to the particular generative machine learning prompt. For example, the estimated output amounts 500 may be a number of tokens estimated to be output by a given generative machine learning model.

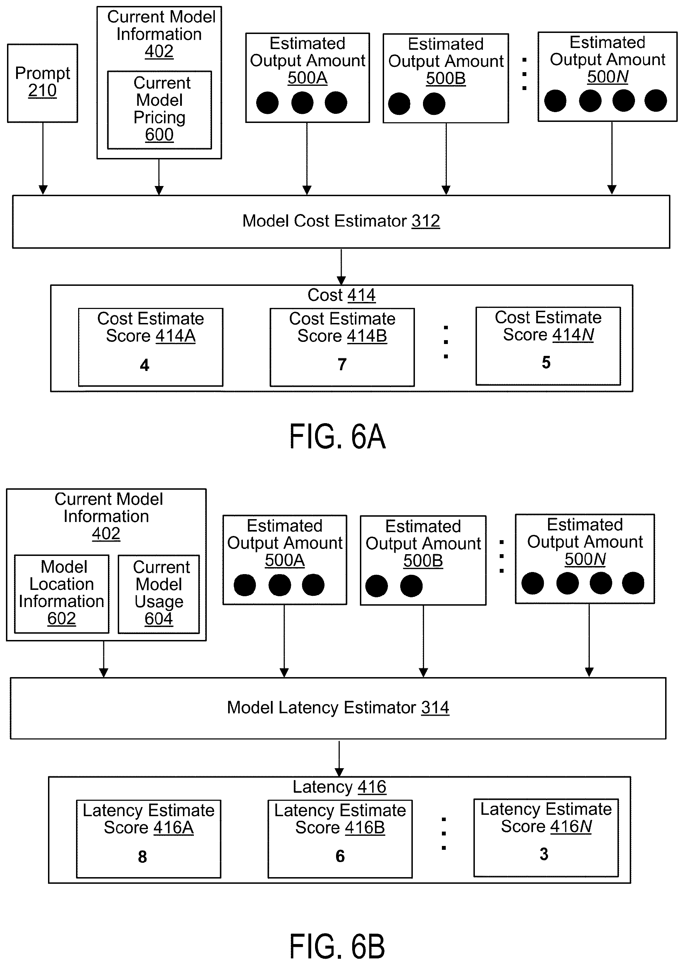

FIG. 6A is a block diagram illustrating specific inputs and associated example outputs of a model cost estimator, according to some embodiments.

A model cost estimator 312 may estimate the cost of processing the generative machine learning model prompt 210 at the respective generative machine learning models available to the generative machine learning router for consideration. The model cost estimator 312 may be a type of resource consumption estimator because the model cost estimator 312 estimates an amount of money which would be consumed in order to process the generative machine learning model prompt 210 at a given generative machine learning model. Each generative machine learning model available to the generative machine learning model router for consideration may be associated with an estimated output amount 500 generated by a model output amount estimator.

The model cost estimator 312 may use current model information 402 comprising a current pricing model 600 for each of the generative machine learning models to estimate cost 414 for each of the generative machine learning models. A current pricing model 600 may detail pricing schemas such as a base cost, a cost based on prompt size, and a cost based on output amount. The model cost estimator 312 may generate cost estimates (which may be used to generate cost estimate scores, which may be scores between 1-10 such as cost estimate score 414A, cost estimate score 414B, and cost estimate score 414N) based on the generative machine learning model prompt 210 and the respective estimated output amounts 500. The estimated costs (or cost estimate scores 414) may be used as consideration factors for a selection model.

FIG. 6B is a block diagram illustrating specific inputs and associated example outputs of a model latency estimator, according to some embodiments.

A model latency estimator 314 may estimate the latency that respective generative machine learning models available to the generative machine learning model router for consideration would have while processing the generative machine learning model prompt 210 if selected to process the generative machine learning model prompt 210. The model latency estimator 314 may be a type of resource consumption estimator because the model latency estimator 314 estimates an amount of time which would be consumed in order to process the generative machine learning model prompt 210 at a given generative machine learning model. As with quality, there may be multiple sub-components of latency, such as time to first token generation, output generation time, and overall time to return a response. The model latency estimator may estimate any or all of the sub-components of latency.

The model latency estimator 314 may use current model information 402 comprising model location information 602 and current model usage 604. Model location information 602 may affect an estimation of latency because communicating (i.e., sending a generative machine learning model prompt 210 and receiving a response from the generative machine learning model) with generative machine learning models which are hosted in external networks or physically distant locations may take a longer time than communicating with generative machine learning models which are hosted locally in terms of network or physical locations. The same model hosted in two different locations may be represented twice in order to accurately estimate latency for the model at both locations. Current model usage 604 may affect an estimation of latency because more highly used generative machine learning models may appear slower from the perspective of a user than less used generative machine learning models because the more highly used generative machine learning models may process several other unrelated generative machine learning model prompts which were placed in the more highly used generative machine learning models' workloads before the generative machine learning model prompt 210.

An estimated output amount 500 may affect an estimation of latency because generative machine learning models may take more time to generate more output than the generate less output. The model latency estimator 314 may estimate an amount of time a given generative machine learning model would take to process the generative machine learning model prompt 210 if selected to process the generative machine learning model prompt 210. The model latency estimator 314 may use the estimated amount of time as a latency 416 estimate, or use the estimated amount of time to generate respective latency estimate scores 416 (which may be scores between 1-10, such as latency estimate score 416A, latency estimate score 416B, and latency estimate score 416N). The latency 416 estimates may be a consideration factor that a selector model may use to determine which generative machine learning model is to be used to process the generative machine learning model prompt.

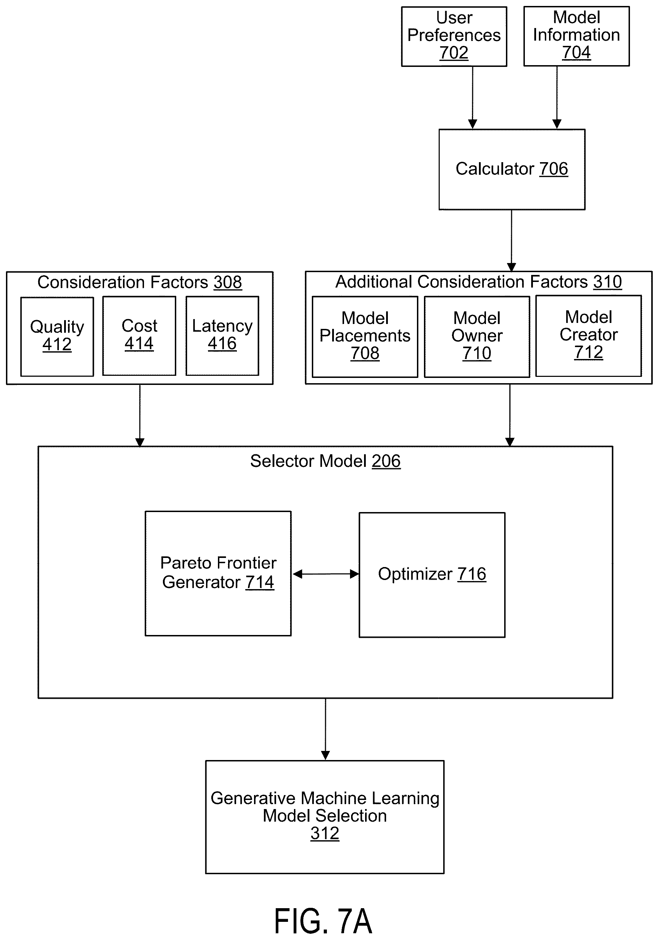

FIG. 7A is a block diagram illustrating specific inputs and the expected output of a selector model, according to some embodiments.

In addition to the estimated consideration factors 308, a selector model 206 may rely on additional consideration factors 310 which are not estimated in order to generate a generative machine learning model selection 312. The additional consideration factors may be based on known model information 704, for example, model placements 708, model owner 710, and model creator 712. Users may have user preferences 702 indicating which model placements 708, model owner 710, and model creator 712 are to influence the selector model 206. For example, a user may generally prefer models which are placed on devices of the user, models which the user owns, and models which the user created. Scores for the additional consideration factors 310 may be generated by a calculator 706 based on the user preferences 702 and the respective model information 704.

A selector model 206 may evaluate the estimated consideration factors 308 and the additional consideration factors 310 according to adjustable weights for each factor. The selector model 206 may use a Pareto frontier generator 714 to generate a Pareto frontier using weights for each factor. The Pareto frontier may define acceptable constraints provided by a user (i.e., a minimum acceptable quality, a maximum acceptable cost, a maximum acceptable time, etc.) and an optimization hyperplane where points on or near the hyperplane represent the generative machine learning models which are the most optimal generative machine learning models.

Each factor may correspond to a dimension of a Pareto frontier space. The generative machine learning models available for consideration by the generative machine learning model router may be represented as points which are placed in the Pareto frontier space by using the respective consideration factor scores to generate respective point locations. The optimizer 716 may solve the Pareto frontier problem generated by the Pareto frontier generator 714. The solution to the Pareto frontier problem would be a point which corresponds to the most optimized generative machine learning model to process the particular generative machine learning model prompt based on the consideration factors 308 and additional consideration factors 310, within the constraints provided by the user. The selector model 206 selects the generative machine learning model which corresponds to the solution point as the generative machine learning model selection 312. The optimizer 716 may use Bayesian optimization techniques to probabilistically select the most optimized generative machine learning model. The optimizer 716 may use a covariance model to select a generative machine learning model, and may work in concert with an update model to implement explore-exploit techniques such as the multi-armed bandit selection technique.

The selector model 206 may use an optimization formula (for example, a formula selected or provided by a user) to select a generative machine learning model. For example, the optimization formula may be simpler than a Pareto frontier and may direct that any generative machine learning model with estimated consideration factors above a threshold level may be selected. The optimization formula may be directed to a particular goal, i.e., the optimization formula may include a preference for generative machine learning models with particular features such as higher quality or lower cost. The selector model 206 may also use a fallback selection technique, for example if the selector model 206 is unable to select a generative machine learning model within a time threshold, the generative machine learning model prompt is sent to a generative machine learning model which has been pre-selected as a fallback generative machine learning model, for example, by default or by the user. The selector model 206 may output two or more models as potential candidates or recommend a sequential plan to utilize one model prior to another model. The selector model 206 may include an overwrite function which may prevent the generative machine learning model prompt from being sent to a generative machine learning model which is unavailable or disallowed from processing the generative machine learning model prompt, and directed to a fallback generative machine learning model instead.

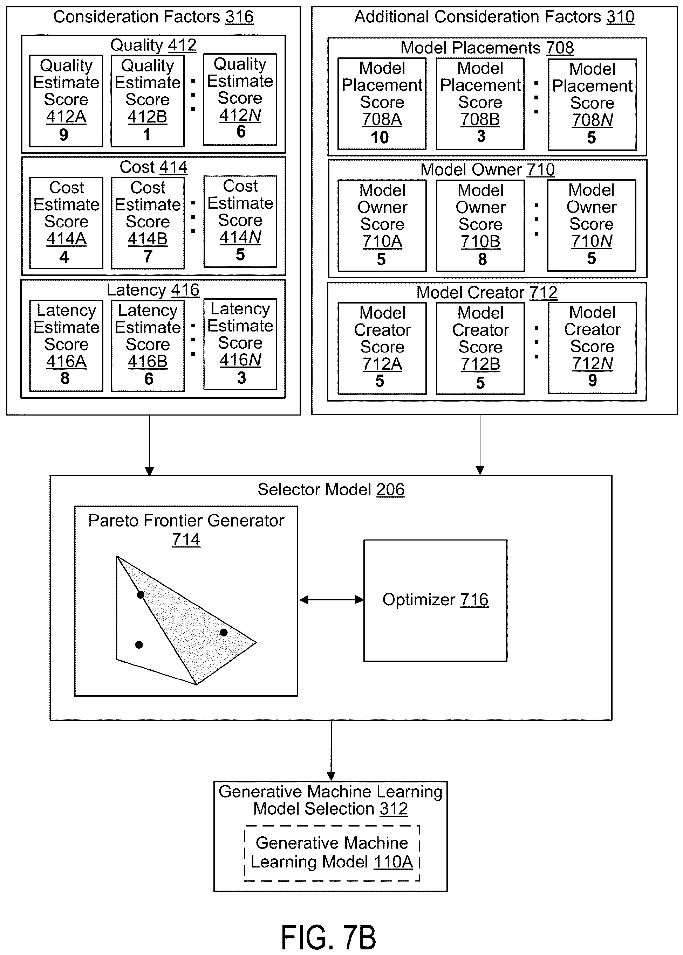

FIG. 7B is a block diagram illustrating examples of inputs and associated outputs of a selector model, according to some embodiments.

Using the estimate scores from FIGs. 6A and 6B and additional example estimate scores for quality 412, model placements 708, model owner 710, and model creator 712, the selector model generates a Pareto frontier with specific points corresponding to the optimization of the respective generative machine learning models for processing the particular generative machine learning model prompt, where optimization is determined using the scores of the consideration factors 316 and the additional consideration factors 310. The optimizer 716 solves for the most optimized point of the generated Pareto frontier based on weights known to the selector model 206, where the most optimized point corresponds to the generative machine learning model selection 312, which is generative machine learning model 110A in this example. The weights may be adjusted by an update model to align the optimization determination of the selector model 206 with user preferences.

Quality 412 is represented here as quality estimation scores 412A-N, but may also be represented as vectors, for example, vectors with dimensions corresponding to various indicators of quality which have individual scores. Similarly, cost 414 may be represented as an estimated amount of money rather than the illustrated cost estimate score 414A-N and latency 416 may be represented as an estimated amount of time rather than the illustrated latency estimate score 416A*N.*

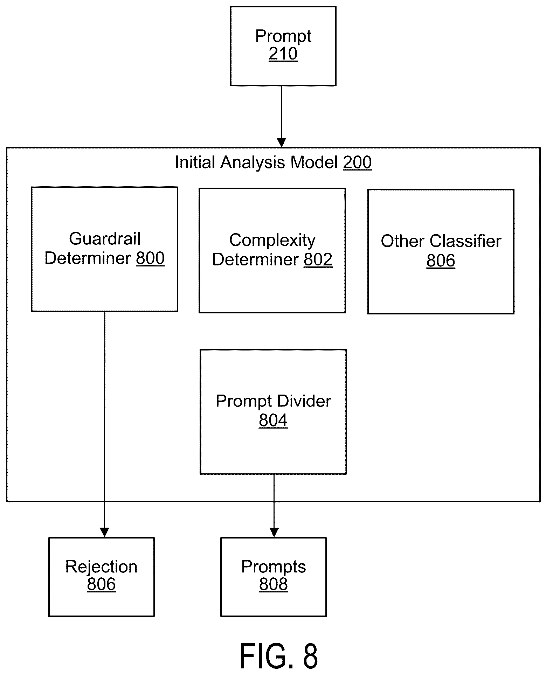

FIG. 8 is a block diagram illustrating an initial analysis model, according to some embodiments.

An initial analysis model 200 may be logically separate from the generative machine learning model router, as the initial analysis model 200 may determine whether to allow the generative machine learning model prompt 210 to be analyzed by a particular generative machine learning model router. For example, a guardrail determiner 800 may determine that a generative machine learning model prompt 210 implicates a guardrail and that the generative machine learning model prompt 210 is to be rejected (806) rather than assigned to a generative machine learning model for processing. A guardrail determiner 800 may be a type of classifier model which is trained to classify generative machine learning model prompts 210 according to whether the generative machine learning model prompts 210 implicate the guardrail or do not implicate the guardrail.

The initial analysis model 200 may also alter the generative machine learning model prompts 210, for example using a complexity determiner 802 and a prompt divider 804. The complexity determiner 802 may determine that a generative machine learning model prompt 210 is above a threshold level of complexity. In response to the determination that the generative machine learning model prompt 210 is above a threshold level of complexity, the prompt divider 804 may generate multiple less complex generative machine learning model prompts 808 based on the original generative machine learning model prompt 210. The complexity determiner 802 may analyze the multiple less complex generative machine learning model prompts 808 to determine whether the multiple less complex generative machine learning model prompts 808 are above a threshold level of complexity. Multiple less complex generative machine learning model prompts 808 which were generated from the same generative machine learning model prompt 210 may remain associated with each other. Outputs of generative machine learning models for the multiple less complex generative machine learning model prompts 808 may be combined prior to being returned to the user as a response to the original generative machine learning model prompt 210.

Other classifiers 806 may be used to ensure that the appropriate components of the generative machine learning model router are used to process the generative machine learning model prompt. For example, generative machine learning model prompts directed to generative machine learning models for different modalities may be processed differently through a generative machine learning model router. For example, a different prompt encoder may be used for generative machine learning model prompts targeting a generative machine learning model which generates images than for generative machine learning model prompts targeting a generative machine learning model which generates text. Additionally, indicators of quality for different modalities may be different, so a model quality estimator may use different component estimators to generate a quality vector or score. For example, an indicator of quality in text may be conciseness, which may not be an applicable indicator of quality for an image. Conversely, an indicator of quality in an image may be coherence, which may also be an indicator of quality in text and may be assessed differently for text than for images.

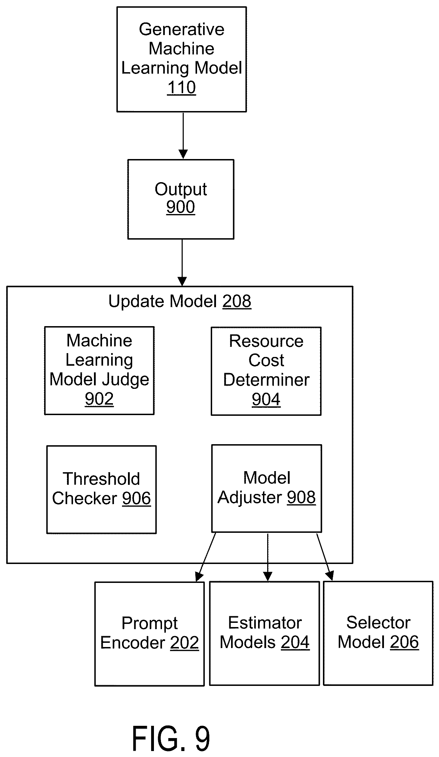

FIG. 9 is a block diagram illustrating an update model, according to some embodiments.

An update model 208 may determine adjustments to a prompt encoder 202, estimator models 204, and a selector model 206 based on analysis of output 900 generated by a selected generative machine learning model 110 in response to the generative machine learning model prompt. The update model 208 may also determine adjustments to aggregation techniques used to generate input to model quality estimators and model output amount estimators based on the prompt embedding and model identity embeddings. Output 900 which has potential for improvement in quality or resource preservation may cause the update model 208 to adjust a component of the generative machine learning model router. The update model 208 may use contrastive learning and triplet losses when training the prompt encoder 202 and an associated model identity encoder. The update model 208 may use cosine loss when training an model output amount estimator model. The update model 208 may use mean squared error loss or mean absolute error loss when training a model quality estimator. The update model may use learning to rank losses when training a selector model 206.

The update model 208 may use a machine learning model judge 902 which has been trained to identify indicators of quality in order to determine a level of quality. An example of a machine learning model judge 902 may be a large language model acting as a judge based on receiving the output 900 and a prompt to judge the output 900 based on various indicators of quality, which may be called LLM-as-a-judge. Another example of a machine learning model judge 902 is a classifier which is trained to classify output 900 into quality level categories, such as good, fair, and poor categories for various indicators of quality.

The resource cost determiner 904 may check the actual resource consumption of generating the output 900 against the estimated resource consumption. Resources such as cost and time may be obtained by direct information such as an itemized charge from the generative machine learning model owner or a timer between sending the generative machine learning model prompt and receiving the output 900. Resources such as computing device wear and electricity consumption may be obtained by calculation based on the size of the output 900 using known information about the generative machine learning model 110's architecture and host computing device.

The threshold checker 906 may receive the actual quality information and the actual resource consumption information from the machine learning model judge 902 and the resource cost determiner 904 respectively. The threshold checker 906 may determine whether the actual quality and resource consumption are within an acceptable limit of the respective estimates and user defined thresholds of acceptable quality and resource consumption. The thresholds may be defined by percentages relative to a maximum for the set of generative machine learning models which were available to the generative machine learning model router for consideration, for example, some percentage of a known most expensive model's cost or some percentage of a known high-performing model's quality.

If the actual quality and resource consumption differ from the respective estimates beyond a threshold limit or exceed the user defined thresholds (such as a constraint) of acceptable quality and resource consumption, the model adjuster 908 may adjust the weights of a component of the generative machine learning model router. The model adjuster 908 may be a reward model which reinforces correct decisions by the generative machine learning model router and modifies the generative machine learning model router in response to poor decisions.

The update model 208 may generate logs of routing decisions, such as including a generative machine learning model prompt, an identification of the selected generative machine learning model, and the output 900. The logs of routing decision may be used as training data for new customized components of a generative machine learning model router.

The update model 208 may work in concert with a selector model to implement explore-exploit techniques, assuming that the relationship between various consideration factors can be represented using a covariance matrix (e.g., as provided quality improves or declines, the user may accept a level of corresponding increase or decrease in another factor such as cost or latency, and vis versa). For example, a training iteration may correspond to an instance of a generative machine learning model prompt being delivered to a selected generative machine learning model. The training iteration may begin, from the perspective of the update model 208, when the selector model selects a generative machine learning model to process the generative machine learning model prompt.

The selector model may use a probability function to select the generative machine learning model. The probability function may be adjusted, by the update model 208 in response to calculating a reward vector (***R***(*A*)), using gradients which are based on a learning rate (*g*). For example, the update model 208 may use the equation *Q'*(*A*) = *Q*(*A*) + *g*(*r'*(*A*) *- Q*(*A*)) where *Q*(*A*) represents the probability function for selecting the selected *A* generative machine learning model out of *N* generative machine learning models that was used in the current iteration, *Q'*(*A*) represents the updated probability function, and *r'*(*A*) represents the updated reward function for the training iteration. The reward function (*r*(*A*)) may be updated based on a reward vector and a vector representation of the selected model (***E***(*A*)) where each dimension corresponds to a consideration factor, which may be the model identity embedding corresponding to the generative machine learning model. The reward function may be updated using a stochastic approximation equation, for example, *r'*(*A*) = (1 - *u*)*r*(*A*) *+ u〈**E**(A)*, *R*(*A*)〉 · 〈***E***(*A*)*, **R***(*A*)〉 where *u* represents another learning rate, which may be equal to *g.* The reward vector may represent the actual assessment of the output 900 for the consideration factors. The updated probability function may be unique to the user and may reflect the user's preferences more accurately than subjectively chosen weights provided by the user.

FIG. 10A is a block diagram illustrating a combiner model, according to some embodiments.

A combination model 1000 may combine multiple outputs (such as output 900A and output 900N) to generate a combined output 1002. The multiple outputs may be for multiple less complex generative machine learning model prompts 808, and the combined output 1002 may be a response to an original undivided generative machine learning model prompt. The combination model 1000 may use the multiple less complex generative machine learning model prompts 808 to guide combining the outputs 900. The combined output 1002 may be a consensus output of multiple selected generative machine learning models which may be expected to produce responses to a generative machine learning model prompt that, when combined, meet a threshold level of quality.

FIG. 10B is a block diagram illustrating an encoder training group, according to some embodiments.

A prompt encoder 202 may be trained in tandem with a model identity encoder 1006 as part of an encoder training group 1004. The encoder training group 1004 may have a goal of training the prompt encoder 202 and model identity encoder 1006 to generate prompt embeddings 304 and model identity embeddings which are related to each other. For example, a known prompt 210 which a particular generative machine learning model 110B has produced high quality results for should correspond to a prompt embedding 304 which has an relationship to a corresponding model identity embedding 306B for the generative machine learning model 110B. For example, the prompt embedding 304 may be near in vector space to model identity embedding 306B. The model identity encoder 1006 may weight similar information for a generative machine learning model 110 in a similar way that the prompt encoder 202 weights information for a generative machine learning prompt 210.

A model identity encoder 1006 may generate a model identity embedding 306 based on information about the generative machine learning model 110 rather than based on the generative machine learning model 110 directly. For example, information about a given generative machine learning model 110 may be based on the output of the generative machine learning model in response to a set of test queries which are directed to provoking responses that indicate the skill level of the generative machine learning model 110 with regards to particular types of tasks and other indications of quality responses. The output that the generative machine learning model 110 generates in response to the test queries may be the information about the generative machine learning model 110 used to generate the model embedding 306, or evaluations of the output may be the information about the generative machine learning model 110 used to generate the model embedding 306.

Adding a generative machine learning model 110 for consideration by the generative machine learning model router 110 may be performed by running the set of test queries on the generative machine learning model 110 to be added and providing the information about the generative machine learning model 110 to the model identity encoder 1006 to generate a model embedding 306 for the generative machine learning model 110.

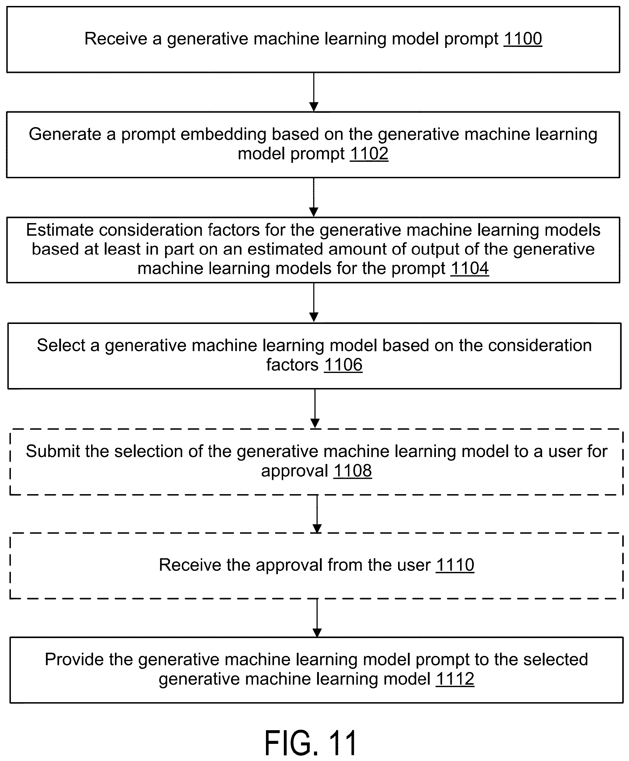

FIG. 11 is a flow diagram illustrating a process of using a machine learning model router to select a generative machine learning model for a prompt, according to some embodiments.

At 1100, a generative machine learning model router receives a generative machine learning model prompt. At 1102, the generative machine learning model router, using a prompt encoder, generates a prompt embedding based on the generative machine learning model prompt. At 1104, the generative machine learning model router, using estimator models, estimates consideration factors for the generative machine learning models based at least in part on an estimated amount of output of the generative machine learning models for the prompt. At 1106, the generative machine learning model router selects a generative machine learning model to process the generative machine learning model prompt based on the consideration factors.

In some embodiments, at 1108 the generative machine learning model router submits the selection of the generative machine learning model to a user for approval. For example, the generative machine learning model router may output an indication of the selected generative machine learning model. At 1110, the generative machine learning model receives approval from the user to process the generative machine learning model prompt using the selected generative machine learning model, or the user may elect to redo the selection of the generative machine learning model. At 1112, the generative machine learning model router provides the generative machine learning model prompt to the selected generative machine learning model.

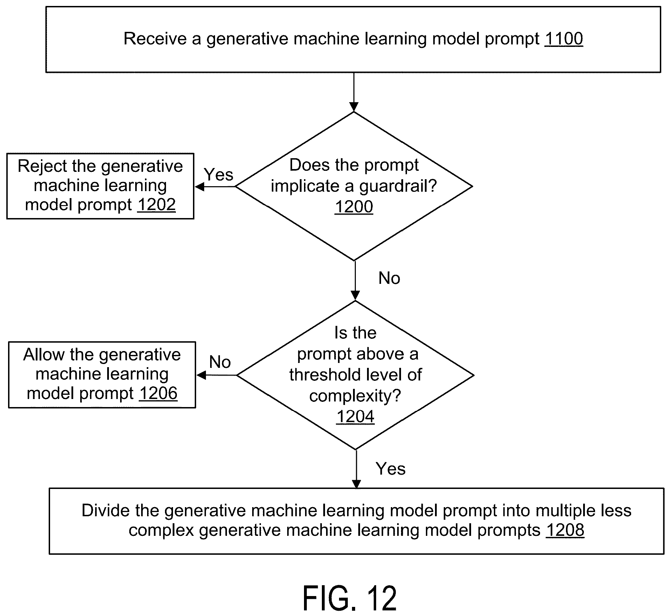

FIG. 12 is a flow diagram illustrating a process of initial analysis for a machine learning model router, according to some embodiments.

At 1100, a generative machine learning model router receives a generative machine learning model prompt. In embodiments using an initial analysis model, at 1200 the initial analysis model determines whether the generative machine learning model prompt implicates a guardrail. For example, certain generative machine learning model prompts (i.e., prompts containing requests for hazardous information such as detailed instructions as to how to create weapons, prompts which are too poorly constructed to parse, and prompts which aim to cause the generative machine learning model to respond with inappropriate language) may be routinely rejected by generative machine learning models, and processing such requests at a generative machine learning model may waste resources by increasing traffic to the generative machine learning model. If the initial analysis model determines the generative machine learning model prompt implicates a guardrail, at 1202 the initial analysis model rejects the generative machine learning model prompt.

If the initial analysis model determines the generative machine learning model prompt does not implicate a guardrail, at 1204 the initial analysis model determines whether the generative machine learning model prompt is above a threshold level of complexity. If the initial analysis model determines the generative machine learning model prompt is not above a threshold level of complexity, at 1206 the initial analysis model allows the generative machine learning model prompt to proceed to the prompt encoder. If the initial analysis model determines the generative machine learning model prompt is above a threshold level of complexity, at 1208 the initial analysis model divides the generative machine learning model prompt into multiple less complex generative machine learning model prompts and allows the multiple less complex generative machine learning prompts to proceed to the prompt encoder. If the initial analysis model determines the generative machine learning prompt is not above the threshold level of complexity, the initial analysis model determines not to divide the prompt into another prompt with lesser complexity.

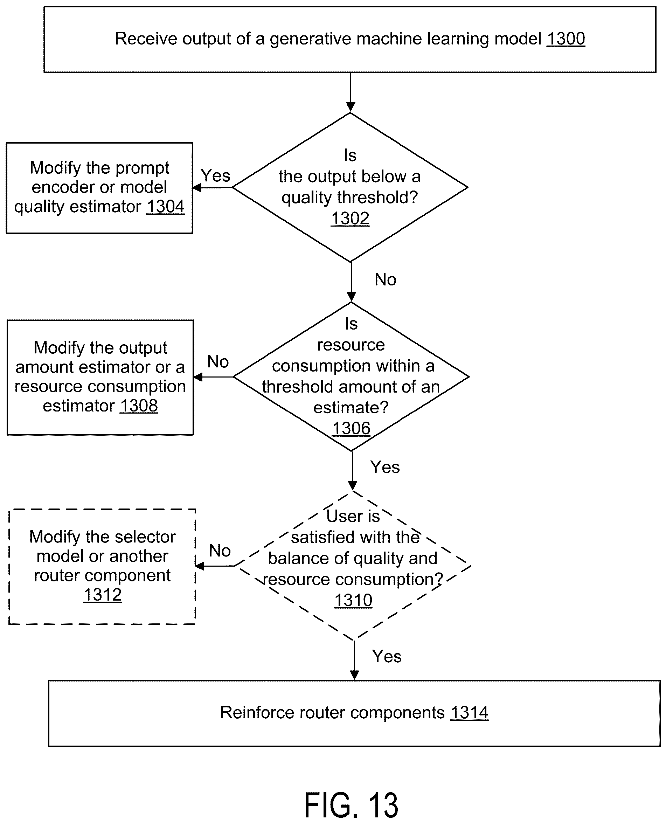

FIG. 13 is a flow diagram illustrating a process of updating a machine learning model router, according to some embodiments.

At 1300, an update model receives output of a generative machine learning model. The output may be a generative machine learning model response to the generative machine learning model prompt that the generative machine learning model router sent to the generative machine learning model. At 1302, the update model determines whether the output is below a quality threshold. For example, the update model may be trained using human-labeled analysis of response quality. The update model may use an LLM-as-a-judge to determine output quality. The update model may also accept direct feedback from a user regarding output quality. The user may set the quality threshold. Quality may include several indicators of quality, such as accuracy, correctness, conciseness, legibility, coherence, and other indicators. Quality being below a threshold level may be a potential for improvement.

If the update model determines the output is below a quality threshold, at 1304 the update model modifies the prompt encoder or model quality estimator, for example by adjusting the weights. The update model may also adjust the weights of a selector model to prioritize selection of a generative machine learning model based on quality.

If the update model determines the output is not below a quality threshold, at 1306 the update model determines whether the resource consumption is within a threshold amount of the estimate. For example, the threshold may be 150% of the estimated cost, so an output associated with an actual cost that is 175% of the estimated cost may be beyond the threshold. A user may set the resource threshold. If the update model determines the resource consumption is not within the threshold amount, at 1308 the update model modifies the model output amount estimator or a resource consumption estimator such as a model cost estimator, a model latency estimator, or another resource estimator, for example by adjusting the weights. The update model may also adjust the weights of a selector model to prioritize selection of a generative machine learning model based on resource consumption. Resource consumption being above a threshold amount may be a potential for improvement.

If the update model determines the resource consumption is within the threshold amount, at 1310 the update model determines whether a user is satisfied with the balance of quality and resource consumption. The update model may determine whether a user is satisfied with the balance of quality and resource consumption by checking for user feedback. If the update model determines the user is not satisfied with the balance of quality and resource consumption, at 1312 the update model modifies the selector model or another component of the generative machine learning model router, for example by adjusting the weights. If the update model determines the user is satisfied with the balance of quality and resource consumption, at 1314 the update model reinforces component models of the generative machine learning model router. User preferences may identify potential for improvement. The update model may act as a reward model to continuously update the generative machine learning model router. While the update model is described here as performing granular updates immediately in response to output of a generative machine learning model, updates may be performed in batches periodically or upon request by a user or external entity.

### Example Computer System

FIG. 14 is a block diagram illustrating an example computer system that implements some or all of the techniques described herein, according to some embodiments.

FIG. 14 illustrates example computer system 1400 usable to implement the machine learning model router as described above with reference to FIGs. 1-13. In different embodiments, computer system 1400 may be any of various types of devices, including, but not limited to, a network computer, a mobile device, a consumer device, application server, storage device, a peripheral device such as a switch, modem, router, or in general any type of computing or electronic device.

Various embodiments of program instructions for a machine learning model router 1430, as described herein, may be executed in one or more computer systems 1400, which may interact with various other devices. Note that any component, action, or functionality described above with respect to FIGs. 1-13 may be implemented on one or more computers configured as computer system 1400 of FIG. 14, according to various embodiments. In the illustrated embodiment, computer system 1400 includes one or more processors 1410 coupled to a system memory 1420 via an input/output (I/O) interface 1440. Computer system 1400 further includes a network interface 1450 coupled to I/O interface 1440, and one or more input/output devices 1460. In some cases, it is contemplated that embodiments may be implemented using a single instance of computer system 1400, while in other embodiments multiple such computer systems, or multiple nodes making up computer system 1400, may be configured to host different portions or instances program instructions as described above for various embodiments. For example, in one embodiment some elements of the program instructions may be implemented via one or more nodes of computer system 1400 that are distinct from those nodes implementing other elements.

In some embodiments, computer system 1400 may be implemented as a system on a chip (SoC). For example, in some embodiments, processors 1410, memory 1420, I/O interface 1440 (e.g., a fabric), etc. may be implemented in a single SoC comprising multiple components integrated into a single chip. For example, a SoC may include multiple CPU cores, a multi-core GPU, a multi-core neural engine, cache, one or more memories, etc. integrated into a single chip. In some embodiments, an SoC embodiment may implement a reduced instruction set computing (RISC) architecture, or any other suitable architecture.

System memory 1420 may be configured to store compression or decompression program instructions for a machine learning model router 1430 accessible by one or more of the processors 1410. In various embodiments, system memory 1420 may be implemented using any suitable memory technology, such as static random-access memory (SRAM), synchronous dynamic RAM (SDRAM), nonvolatile/Flash-type memory, or any other type of memory. In the illustrated embodiment, program instructions for a machine learning model router 1430 may be configured to implement any of the functionality described above. In some embodiments, program instructions and/or data may be received, sent, or stored upon different types of computer-accessible media or on similar media separate from system memory 1420 or computer system 1400.

In one embodiment, I/O interface 1440 may be configured to coordinate I/O traffic between processor 1410, system memory 1420, and any peripheral devices in the device, including network interface 1450 or other peripheral interfaces, such as input/output devices 1460. In some embodiments, I/O interface 1440 may perform any necessary protocol, timing, or other data transformations to convert data signals from one component (e.g., system memory 1420) into a format suitable for use by another component (e.g., processor 1410). In some embodiments, I/O interface 1440 may include support for devices attached through various types of peripheral buses, such as a variant of the Peripheral Component Interconnect (PCI) bus standard or the Universal Serial Bus (USB) standard, for example. In some embodiments, the function of I/O interface 1440 may be split into two or more separate components, such as a north bridge and a south bridge, for example. Also, in some embodiments, some or all of the functionality of I/O interface 1440, such as an interface to system memory 1420, may be incorporated directly into processor 1410.

Network interface 1450 may be configured to allow data to be exchanged between computer system 1400 and other devices attached to a network 1470 (e.g., carrier or agent devices) or between nodes of computer system 1400. Network 1470 may in various embodiments include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface 1450 may support communication via wired or wireless general data networks, such as any suitable type of Ethernet network, for example; via telecommunications/telephony networks such as analog voice networks or digital fiber communications networks; via storage area networks such as Fiber Channel SANs, or via any other suitable type of network and/or protocol.

Input/output devices 1460 may, in some embodiments, include one or more display terminals, keyboards, keypads, touchpads, scanning devices, voice or optical recognition devices, or any other devices suitable for entering or accessing data by one or more computer systems 1400. Multiple input/output devices 1460 may be present in computer system 1400 or may be distributed on various nodes of computer system 1400. In some embodiments, similar input/output devices may be separate from computer system 1400 and may interact with one or more nodes of computer system 1400 through a wired or wireless connection, such as over network interface 1450.

As shown in FIG. 14, memory 1420 may include program instructions for a machine learning model router 1430, which may be processor-executable to implement any element or action described above. In one embodiment, the program instructions may implement the methods described above. In other embodiments, different elements and data may be included.

Computer system 1400 may also be connected to other devices that are not illustrated, or instead may operate as a stand-alone system. In addition, the functionality provided by the illustrated components may in some embodiments, be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 1400 may be transmitted to computer system 1400 via transmission media or signals such as electrical, electromagnetic, or digital signals, conveyed via a communication medium such as a network and/or a wireless link. Various embodiments may further include receiving, sending, or storing instructions and/or data implemented in accordance with the foregoing description upon a computer-accessible medium. Generally speaking, a computer-accessible medium may include a non-transitory, computer-readable storage medium or memory medium such as magnetic or optical media, e.g., disk or DVD/CD-ROM, volatile or non-volatile media such as RAM (e.g., SDRAM, DDR, RDRAM, SRAM, etc.), ROM, etc. In some embodiments, a computer-accessible medium may include transmission media or signals such as electrical, electromagnetic, or digital signals, conveyed via a communication medium such as network and/or a wireless link.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

Therefore, from one perspective there have been described techniques applicable to a situation in which a user of a machine learning model service may lack information about the suitability of particular generative machine learning models for particular tasks. The user may benefit from a machine learning model router that outputs intelligent decisions on which generative machine learning model is more suitable than other generative machine learning models for a particular prompt with respect to known or unknown hardware and process constraints. Suitability may be based on a variety of factors, such as quality of the model for the particular prompt, expected resource expenditure for the particular prompt such as cost or latency, and other factors such as which computing device or devices hosts the generative machine learning model.

Embodiments of the present disclosure can be described in view of the following clauses:
1. A system, comprising: one or more computing devices configured to:
   receive a generative machine learning model prompt which is to be processed by at least one of a set of generative machine learning models, wherein the set of generative machine learning models comprises more than two generative machine learning models;
   estimate consideration factors, using at least one estimator machine learning model which uses a prompt embedding and a set of model identity embeddings which correspond with respective ones of the set of generative machine learning models, wherein:
      the consideration factors are based on the generative machine learning model prompt; and
      at least one of the consideration factors is based on an estimated amount of output that will be generated by a given one of the set of generative machine learning models;
   select, using the consideration factors, the at least one of the set of generative machine learning models; and
   route the generative machine learning model prompt to the selected at least one of the set of generative machine learning models.
2. The system of clause 1, wherein given ones of the set of model identity embeddings are excluded from use by the at least one estimator machine learning model, based on user specifications or regulatory specifications.
3. The system of clause 1 or clause 2, wherein the at least one estimator machine learning model comprises a quality model and a resource consumption model.
4. The system of any one of clauses 1 through 3, wherein the one or more computing devices are further configured to:
   determine, using the initial analysis model, whether the generative machine learning model prompt implicates a prompt guardrail; and
   reject the generative machine learning model prompt in response to determining that the generative machine learning model prompt implicates the prompt guardrail.
5. The system of any one of clauses 1 through 4, wherein the one or more computing devices are further configured to:
   divide the generative machine learning model prompt into two or more generative machine learning model prompts, each of which is less complex than the generative machine learning model prompt.
6. A method, comprising:
   receiving a prompt which is to be processed by at least one of a set of generative machine learning models, wherein the set of generative machine learning models comprises more than two generative machine learning models;
   estimating, using at least one estimator, consideration factors for the prompt, wherein at least one of the consideration factors is based on an estimated amount of output that will be generated by a generative machine learning model in the set of generative machine learning models with respect to the prompt;
   selecting, based on said estimating, the generative machine learning model from the set of generative machine learning models; and
   providing the prompt to the selected generative machine learning model.
7. The method of clause 6, wherein said estimating the consideration factors for the prompt further comprises using a prompt embedding and a set of model identity embeddings.
8. The method of clause 7, wherein a particular model identity embedding of the set of model identity embeddings is excluded from the said estimating based on a user or regulatory specification.
9. The method of any one of clauses 6 through 8, wherein said estimating the consideration factors for the prompt comprises: estimating a quality of the output that will be generated by a selected one of the set of generative machine learning models with respect to the prompt; and
   estimating an amount of resource consumption that will be consumed by selected one of the set of generative machine learning models with respect to the prompt.
10. The method of any one of clauses 6 through 9, wherein said selecting comprises solving an optimization formula based on the consideration factors.
11. The method of any one of clauses 6 through 10, further comprising:
   outputting an indication associated with the selected generative machine learning model; and
   receiving an approval for the selected generative machine learning model based on the indication prior to said providing the prompt to the selected generative machine learning model.
12. The method of any one of clauses 6 through 11, further comprising:
   determining a complexity level of the prompt; and
   based on the complexity level, determining not to divide the prompt into another prompt with lesser complexity.
13. The method of any one of clauses 6 through 12, further comprising:
   prior to said estimating, using at least one estimator, the consideration factors for the prompt, determining that the prompt does not implicate a prompt guardrail.
14. The method of any one of clauses 6 through 13, further comprising:
   updating the at least one estimator based on an answer generated by the selected generative machine learning model.
15. The method of any one of clauses 6 through 14, wherein said selecting further comprises considering additional consideration factors based on location or traffic information associated with the set of generative machine learning models.
16. A computer-readable medium comprising program instructions, wherein the program instructions, when executed on or across one or more processors, cause the one or more processors to:
   receive a prompt which is to be processed by at least one of a set of generative machine learning models, wherein the set of generative machine learning models comprises more than two generative machine learning models;
   estimate, using at least one estimator, consideration factors for the prompt, wherein at least one of the consideration factors is based on an estimated amount of output that will be generated by a generative machine learning model from the set of generative machine learning models with respect to the prompt;
   select, based on said estimating, the generative machine learning model from the set of generative machine learning models; and
   provide the prompt to the selected generative machine learning model.
17. The computer-readable media of clause 16, wherein the program instructions, when executed on or across the one or more processors, further cause the one or more processors to:
   output an indication associated with the selected generative machine learning model; and
   receive an approval for the selected generative machine learning model based on the indication prior to providing the prompt to the selected generative machine learning model.
18. The computer-readable media of clause 16, wherein the program instructions, when executed on or across the one or more processors, further cause the one or more processors to:
   determine a complexity level of the prompt, wherein the prompt is divided into a plurality of generative machine learning model prompts in response to the determined complexity level exceeding a threshold level of complexity; or
   determine that the prompt does not implicate a prompt guardrail, wherein the prompt is rejected in response to determining it implicates a prompt guardrail.
19. The computer-readable media of any one of clauses 16 through 18, wherein the program instructions, when executed on or across the one or more processors, further cause the one or more processors to:
   update the at least one estimator based on an answer generated by the selected generative machine learning model.
20. The computer-readable media of any one of clauses 16 through 19, wherein the program instructions, when executed on or across the one or more processors, further cause the one or more processors to consider additional consideration factors which are based on location or traffic information associated with the set of generative machine learning models.

## Claims

1. A system, comprising:
one or more computing devices configured to:
receive a prompt which is to be processed by at least one of a set of generative machine learning models, wherein the set of generative machine learning models comprises more than two generative machine learning models;
estimate consideration factors, using at least one estimator, wherein:
at least one of the consideration factors is based on an estimated amount of output that will be generated by a given one of the set of generative machine learning models with respect to the prompt;
select, using the consideration factors, the at least one of the set of generative machine learning models; and
route the generative machine learning model prompt to the selected at least one of the set of generative machine learning models.

2. The system of claim 1, wherein:
the at least one estimator uses a prompt embedding and a set of model identity embeddings which correspond with respective ones of the set of generative machine learning models; and
given ones of the set of model identity embeddings are excluded from use by the at least one estimator machine learning model, based on user specifications or regulatory specifications.

3. The system of claim 1 or claim 2, wherein the at least one estimator machine learning model comprises a quality model and a resource consumption model.

4. The system of any one of claims 1 through 3, wherein the one or more computing devices are further configured to:
determine, using the initial analysis model, whether the generative machine learning model prompt implicates a prompt guardrail; and
reject the generative machine learning model prompt in response to determining that the generative machine learning model prompt implicates the prompt guardrail.

5. The system of any one of claims 1 through 4, wherein the one or more computing devices are further configured to:
divide the generative machine learning model prompt into two or more generative machine learning model prompts, each of which is less complex than the generative machine learning model prompt.

6. A method, comprising:
receiving a prompt which is to be processed by at least one of a set of generative machine learning models, wherein the set of generative machine learning models comprises more than two generative machine learning models;
estimating, using at least one estimator, consideration factors for the prompt, wherein at least one of the consideration factors is based on an estimated amount of output that will be generated by a generative machine learning model in the set of generative machine learning models with respect to the prompt;
selecting, based on said estimating, the generative machine learning model from the set of generative machine learning models; and
providing the prompt to the selected generative machine learning model.

7. The method of claim 6, wherein said estimating the consideration factors for the prompt further comprises using a prompt embedding and a set of model identity embeddings.

8. The method of claim 7, wherein a particular model identity embedding of the set of model identity embeddings is excluded from the said estimating based on a user or regulatory specification.

9. The method of any one of claims 6 through 8, wherein said estimating the consideration factors for the prompt comprises:
estimating a quality of the output that will be generated by a selected one of the set of generative machine learning models with respect to the prompt; and
estimating an amount of resource consumption that will be consumed by selected one of the set of generative machine learning models with respect to the prompt.

10. The method of any one of claims 6 through 9, wherein said selecting comprises solving an optimization formula based on the consideration factors.

11. The method of any one of claims 6 through 10, further comprising:
outputting an indication associated with the selected generative machine learning model; and
receiving an approval for the selected generative machine learning model based on the indication prior to said providing the prompt to the selected generative machine learning model.

12. The method of any one of claims 6 through 11, further comprising:
determining a complexity level of the prompt; and
based on the complexity level, determining not to divide the prompt into another prompt with lesser complexity.

13. The method of any one of claims 6 through 12, further comprising:
prior to said estimating, using at least one estimator, the consideration factors for the prompt, determining that the prompt does not implicate a prompt guardrail.

14. The method of any one of claims 6 through 13, further comprising:
updating the at least one estimator based on an answer generated by the selected generative machine learning model.

15. The method of any one of claims 6 through 14, wherein said selecting further comprises considering additional consideration factors based on location or traffic information associated with the set of generative machine learning models.
